# EUROPÄISCHE PATENTSCHRIFT

(11) **EP 3 494 849 B1**
(45) Veröffentlichungstag und Bekanntmachung des Hinweises auf die Patenterteilung: **02.03.2022**
(21) Anmeldenummer: 18210395.2
(22) Anmeldetag: 05.12.2018
(51) Int. Cl.: A47J 43/28, A47J 45/00

(54) **UTENSILIENHALTER FÜR EIN KÜCHENBEHÄLTNIS**
UTENSIL HOLDER FOR KITCHEN CONTAINER
PORTE-USTENSILES POUR UN RÉCIPIENT DE CUISINE

(30) Priorität: 05.12.2017 DE 202017107405 U
(43) Veröffentlichungstag der Anmeldung: 12.06.2019
(73) Patentinhaber: Vincetic, Pero, 59555 Lippstadt (DE)
(72) Erfinder: Vincetic, Pero, 59555 Lippstadt (DE)
(74) Vertreter: Rumrich, Gabriele

(56) Entgegenhaltungen:
- WO-A1-2007/026384
- CN-U- 206 166 759
- DE-A1- 3 413 481
- DE-A1- 4 009 361
- DE-U1-202014 004 110
- US-A1- 2007 102 061
- US-A1- 2008 149 634
- US-A1- 2011 260 023
- US-B1- 9 119 490
- Anonymous: "Outwell Collaps Tasse zusammenfaltbar grün: Amazon.de: Sport & Freizeit", , 15 December 2014 (2014-12-15), XP055695541, Retrieved from the Internet: URL:https://www.amazon.de/Outwell-Becher-C ollaps-Green-650340/dp/B00R1FNAHM/ref=pd_y bh_a_1?_encoding=UTF8&refRID=AKYAHFS8SWDMR YH7WD2Q&th=1&psc=1 [retrieved on 2020-05-14]
- Anonymous: "MFH US Feldflaschenbecher, Edelstahl, Klappgriffe: Amazon.de: Sport & Freizeit", , 10 February 2017 (2017-02-10), XP055695695, Retrieved from the Internet: URL:https://www.amazon.de/MFH-US-Feldflasc henbecher-Edelstahl-Klappgriffe/dp/B06WV85 6BJ/ref=sr_1_2?__mk_de_DE=ÅMÅZÕÑ&dchild=1& keywords=feldflasche+klappgriff&qid=158947 0328&sr=8-2 [retrieved on 2020-05-14]
- Anonymous: "Collapsible Silicone Cup - Munkees Small Storage: Amazon.de: Küche & Haushalt", , 20 February 2015 (2015-02-20), XP055744414, Retrieved from the Internet: URL:https://www.amazon.de/Munkees-faltbar- Silikon-1538-Camping/dp/B00NL5KCUE [retrieved on 2020-10-27]
- Anonymous: "Amazon.com : Bakerpan Silicone Travel Collapsible Camping Cup, Mug with Lid, 9 oz (Gray) : Sports & Outdoors", , 23 January 2016 (2016-01-23), pages 1-7, XP055788368, Retrieved from the Internet: URL:https://www.amazon.com/dp/B07SZB6PZL?t ag=til-sophie-20&linkCode=ogi&th=1&psc=1 [retrieved on 2021-03-22]

## Beschreibung

Die Erfindung betrifft eine Vorrichtung, zur Aufnahme wenigstens eines Küchenwerkzeuges.

Aus dem Stand der Technik sind zahlreiche Lösungen bekannt, mit welchen insbesondere Kochlöffel an einem Topf befestigt werden können.

Beispielsweise in der Druckschrift DE 10 2007 021 662 A1 wird eine temporäre Vorrichtung zum Halten von Kochwerkzeugen an Behältnissen beschrieben, die einen Grundkörper mit zwei Bügeln umfasst. Ein Bügel dient zur Befestigung an einem Behältnis und der andere Bügel zur Befestigung des Kochwerkzeuges, um dessen Einrutschen in das Behältnis zu verhindern. Das Kochwerkzeug befindet sich dabei somit in dem Behältnis. Dabei ist nachteilig, dass es nicht mehr möglich ist, einen Deckel auf das Gefäß zu setzen.

Die Druckschrift WO 2008/058404 A1 offenbart ein Gefäß zur Aufnahme von Speisen, welches einen Rand aufweist, der so gebogen ist, dass in diesen ein Zubehörteil mit einer Ablagefläche einhängbar und abstützbar ist. Die Ablagefläche kann dabei eine Öffnung oder eine Vertiefung in Form einer Schale aufweisen. Der große Nachteil besteht darin, dass das Zubehörteil nur an einem Topf befestigbar ist, der einen speziell geformten Randbereich aufweist.

Aus der Druckschrift DE 34 13 481 A1 ist ein Behälter für portionierbare Feststoffe, insbesondere Kaffee bekannt. Der Behälter weist an seiner Außenseite einen Messlöffelbehälter auf, in dem ein Messlöffel für die Entnahme des Feststoffes aufbewahrt wird. Der Behälter wird mittels Klammerspangen oder einem zwei Verbindungsstücken an dem Behälter befestigt und ist in der Flexibilität für unterschiedliche Durchmesser des Behälters eingeschränkt.

Die Druckschrift DE 40 09 361 A1 offenbart einen Kochtopfdeckel mit Aufbewahrungskammer für Kochlöffel. Die Aufbewahrungskammer ist auf dem Kochtopfdeckel angeordnet und kann nur mit einem Kochtopf mit passendem Durchmesser eingesetzt werden.

Die US 9,119,490 B1 betrifft ein Schnapsglas, welches an den Rand eines größeren Gefäßes geklemmt werden kann. Eine universelle Anpassung an unterschiedliche Behälterformen bzw. Gefäße ist bei den beiden vorgenannten Lösungen nicht möglich.

Ein Löffelträger mit dehnbarem Band ist aus der Druckschrift G 90 01 674 U1 bekannt.

Das Band ist derart gestaltet, dass es den Behälter, um den es angeordnet ist, vollständig umschlingt. Nachteilig ist, dass bei nicht ausreichender Spannung des Bandes der Löffelträger nach unten rutschen kann. Daher ist der Löffelträger für die Anwendung an einem Kochtopf, unter dem eine Heizplatte angeordnet ist, nicht geeignet.

In DE 20 2014 004 110 U1 ist eine Löffelablage für Kochtopf-Griffe offenbart. Es findet ein Besteck-Halter mit Bügelgriff Anwendung, der zum Teil auf dem Kochtopfgriff aufliegt und gleichzeitig in die Grifföffnung eingehangen ist. Nachteilig ist, dass mit montierter Löffelablage der Kochtopf schwer anhebbar ist, da ein Griff nicht greifbar ist. Daher sollte zuerst die Löffelablage demontiert werden, bevor ein Versetzen des Kochtopfes erfolgt. Ein Behälter für Lebensmittel ist in der Druckschrift WO 2007/026384 A1 beschrieben, wobei der Behälter in Form eines Kochtopfes mit integriertem Löffelhalter ausgebildet ist. Der Halter ist nicht separat und kann daher nicht flexibel eingesetzt werden. Durch die Integration des Löffelhalters steigt die Größe des Topfes, wodurch ein höherer Platzbedarf im Schrank und auf dem Kochfeld benötigt wird.

Eine Befestigung eines Behälters mittels Schraube beziehungsweise mittels eines Stiftelements ist aus der Druckschrift CN 205 286 143 U bekannt. Der Behälter wird mittels einer Schraube indirekt befestigt. Diese Lösung eignet sich nicht für einwandige Behälter, da Flüssigkeiten durch die Öffnung hinauslaufen können.

Die Aufgabe der Erfindung besteht daher darin, eine Vorrichtung, insbesondere für ein Küchenbehältnis wie einen Topf, eine Pfanne, eine Schüssel oder dergleichen zu entwickeln, wobei die Vorrichtung zur Aufnahme wenigstens eines Küchenwerkzeuges, wie z.B. Löffel, Kochlöffel, Gabel, Spieß, Kelle und dergleichen oder auch ein Fleischthermometer, ausgebildet ist, wobei die Vorrichtung einen einfachen konstruktiven Aufbau aufweist und mit unterschiedlichsten Töpfen, Pfannen, Schüsseln beziehungsweise Behältern und dergleichen kombinierbar ist.

Diese Aufgabe wird erfindungsgemäß mit den kennzeichnenden Merkmalen der unabhängigen Ansprüche gelöst.

Vorteilhafte Ausgestaltungen ergeben sich aus den Unteransprüchen.

Die erfindungsgemäße Vorrichtung dient zur Aufnahme wenigstens eines Küchenwerkzeuges in Form eines Löffels, eines Kochlöffels, einer Gabel, eines Spießes, einer Kelle oder dergleichen oder eines Fleischthermometers, wobei die Vorrichtung erfindungsgemäß einen napfförmigen Grundkörper mit wenigstens einem Innenraum aufweist, wobei der napfförmige Grundkörper nach oben hin offen ist und eine sich im Wesentlichen vertikal nach oben erstreckende Umfangswand und einen Boden aufweist und wobei der napfförmige Grundkörper wenigstens ein Befestigungsmittel zur Herstellung einer Verbindung mit einem Küchengerät aufweist derart, dass sich der napfförmige Grundkörper außerhalb des Küchengerätes befindet und wobei die Vorrichtung eine Abdeckung aufweist, welche vom Grundkörper bis über einen oberen Rand des Küchengerätes reicht, wobei die Abdeckung einen Zwischenraum zwischen dem Grundkörper und dem Küchengerät überdeckt, und wobei das Befestigungsmittel gemäß einer erfindungsgemäßen Alternative in Form eines oder mehrerer Magnete und/oder in Form mindestens eines Saugnapfes ausgebildet ist. Der napfförmige Grundkörper kann auch mit dem Befestigungsmittel schwenkbar verbunden sein.

Gemäß einer weiteren erfindungsgemäßen Ausgestaltung ist es vorgesehen, dass sich an die Abdeckung eine nach unten ragende Lasche anschließt, die ein Befestigungsmittel bildet und dass der Grundkörper, die Abdeckung und das Befestigungsmittel aus Silikon bestehen und elastisch verfombar sind.

Dadurch ist es möglich, z.B. ein Küchenwerkzeug in Form eines Kochlöffels nach dem Umrühren der im Topf befindlichen Speisen gleich in dem am Küchengerät (z.B. Topf) befestigten oder integrierten Napf zu positionieren, wodurch der Herd oder die Arbeitsfläche nicht mit heruntertropfenden Essenbestandteilen (wie z.B. Soße) verschmutzt werden können.

Das Befestigungsmittel kann dabei mit dem napfförmigen Grundkörper verbunden oder mit dem napfförmigen Grundkörper einteilig ausgebildet sein. Insbesondere wird der napfförmige Grundkörper mittels des Befestigungsmittels an dem oberen Randbereich des Küchengerätes oder an einem Griff des Küchengerätes oder an einem Henkel des Küchengerätes befestigt. Gemäß einer erfindungsgemäßen Alternative ist das Befestigungsmittel als Lasche ausgebildet und der napfförmige Grundkörper damit am Randbereich und/oder am Griff und/oder am Henkel des Küchengerätes einhängbar.

Gemäß einer weiteren Variante kann das Befestigungsmittel an das Küchengerät auch klemmbar sein.

In diesem Fall weist das Befestigungsmittel einen Klemmbereich zur Befestigung am Rand, dem Griff oder dem Henkel des Küchengerätes auf.

Alternativ ist es auch möglich, zwischen dem Befestigungsmittel und dem napfartigen Grundkörper einen Abstand vorzusehen derart, dass die Vorrichtung im Bereich des Abstandes an dem Küchengerät festgeklemmt wird.

Das Befestigungsmittel kann z.B. in der Art einer Klammer ausgebildet sein und der napfförmige Grundkörper mittels der Klammer am Küchengerät befestigt werden.

Gemäß einer weiteren erfindungsgemäßen Variante ist es auch möglich, das Befestigungsmittel in Form eines oder mehrerer Magnete auszubilden, welche z.B. am napfförmigen Grundkörper angeordnet bzw. in diesen integriert sind, so dass der napfförmige Grundkörper magnetisch am Küchengerät (welches dann bevorzugt aus Stahl besteht) befestigbar ist.

Es ist ebenfalls möglich, das Befestigungsmittel in Form mindestens eines Saugnapfes auszubilden, der sich bei Anrücken an das Küchengerät festsaugt, wodurch der napfförmige Grundkörper am Küchengerät befestigbar ist. Bevorzugt werden mehrere Saugnäpfe neben- und/oder übereinander vorgesehen.

Insbesondere wenn der napfförmige Grundkörper aus Silikon besteht, können an diesem die Saugnäpfe integriert sein und ebenfalls aus Silikon bestehen.

Es ist weiterhin möglich, verschiedene Befestigungsmittel zu kombinieren.

Der napfförmige Grundkörper und/oder das Befestigungsmittel können aus Kunststoff, Silikon, Metall oder einer Kombination der vorgenannten Materialien bestehen und in unterschiedlichsten Farben ausgeführt sein.

Der napfförmige Grundkörper kann in Richtung zum Küchengerät einen umfangsseitigen Wandabschnitt aufweisen, der im Wesentlichen dem umfangsseitigen Verlauf des Randbereichs des Küchengerätes angepasst ist, so dass der napfförmige Grundkörper über einen größeren umfangsseitigen Abschnitt an das Küchengerät angrenzt.

Es ist weiterhin möglich, dass der napfförmige Grundkörper eine oder mehrere Kammern zur Aufnahme von jeweils einem oder mehreren Küchenwerkzeugen aufweist. Die Kammern können dabei auch unterschiedlich groß ausgeführt sein.

Gemäß einer weiteren Variante kann der napfförmige Grundkörper mit dem Befestigungsmittel schwenkbar verbunden sein, so dass es möglich ist, auch bei einem schräg nach außen gerichteten Rand des Küchengerätes den napfförmigen Grundkörper im Wesentlichen senkrecht zu positionieren.

Erfindungsgemäß reicht vom Grundkörper bis über den oberen Rand des Küchengerätes eine Abdeckung.

Die Erfindung wird nachfolgend anhand von Ausführungsbeispielen und zugehörigen Zeichnungen näher erläutert.

Es zeigen:
- Figur 1: eine Draufsicht auf ein Küchengerät in Form eines Kochtopfs mit einem an dessen Rand befestigten napfförmigen Grundkörper,
- Figur 2: Seitenansicht gemäß Figur 1,
- Figur 3: Draufsicht auf einen napfförmigen Grundkörper,
- Figur 4: Schnittdarstellung eines Kochtopfes mit an dessen Rand eingehängtem napfförmigen Grundkörper, gemäß einer nicht erfindungsgemäßen Ausführungsform,
- Figur 5: Draufsicht gemäß Figur 4,
- Figur 6: Kochtopf mit Henkeln, in welche der napfförmige Grundkörper einhängbar ist,
- Figur 7: napfförmiger Grundkörper zum Einhängen in einen Henkel des Kochtopfes,
- Figur 8: Variante eines Grundkörpers mit einem Anstandshalter am unteren Ende,
- Figur 9: Grundkörper, der sich nach unten hin verjüngt,
- Figur 10: Grundkörper mit einem Befestigungsbereich, der nach unten klappbar ist,
- Figur 11: Grundkörper, der teleskopierbar ist,
- Figur 12: Kochtopf, bevorzugt aus Stahl, an welchem ein Grundkörper magnetisch befestigbar ist
- Figur 13: Küchengerät in Form einer Schüssel mit eingehängtem napfförmigem Grundkörper,
- Figur 14: Küchengerät in Form einer Pfanne mit schrägem Rand und daran angeklemmtem napfförmigen Grundkörper,
- Figur 15: Küchengerät in Form einer Pfanne mit nach oben gerade (vertikal) verlaufendem Rand und daran angeklemmtem napfförmigen Grundkörper,
- Figur 16: eine Vorrichtung mit napfförmigem Körper und im Wesentlichen quadratischem Querschnitt, an dessen einer Seite nebeneinander und übereinander mehrere Saugnäpfe ausgebildet sind,
- Figur 17: Draufsicht gem. Figur 16,
- Figur 18: Ansicht einer Vorrichtung aus Richtung des Bodens 3.4 mit Saugnäpfen an mehreren Seiten,
- Figur 19: Ansicht der Vorrichtung in der Seitenansicht gemäß Figur 18.
- Figur 20: eine Vorrichtung in der Art eines Bechers mit herunterklappbarem laschenartigen Befestigungsmittel,
- Figur 21: Vorrichtung gemäß Figur 20 mit heruntergeklapptem Befestigungsmittel.

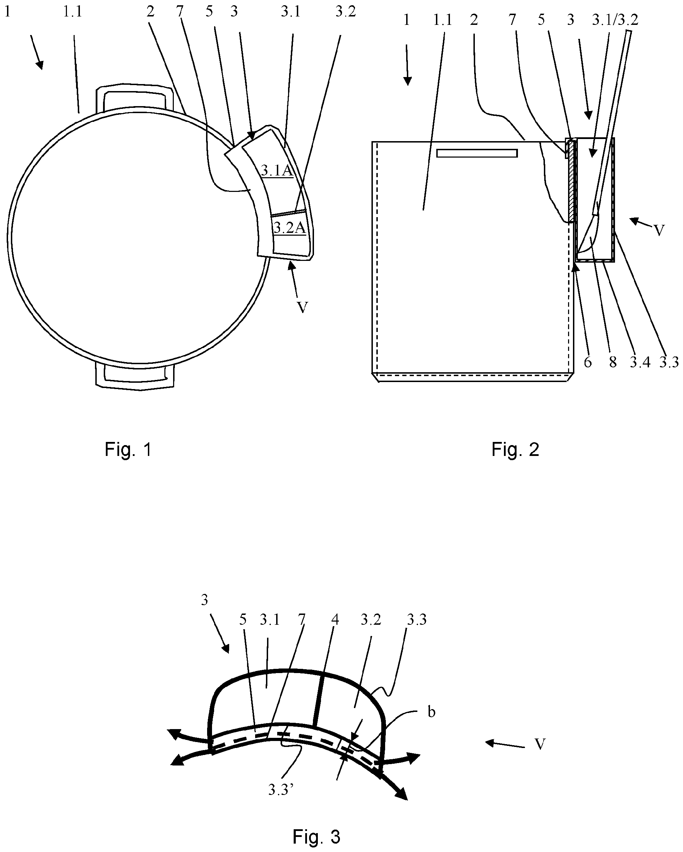

In Figur 1 ist eine Draufsicht und in Figur 2 eine Seitenansicht eines Küchengerätes 1 in Form eines Kochtopfs 1.1 mit einem an dessen Rand 2 durch Einhängen befestigte Vorrichtung (V) dargestellt. Die Vorrichtung V weist einen napfförmigen Grundkörper 3 mit hier zwei voneinander durch eine vertikale Zwischenwand 4 getrennte gleich tiefe Kammern 3.1, 3.2 auf, wobei hier die erste Kammer 3.1 größer ist als die zweite Kammer 3.2. Die Kammern 3.1, 3.2 können auch die gleiche Größe aufweisen und/oder unterschiedlich tief sein.

Der Bereich zwischen dem Innenraum 1A des Kochtopfs 1.1 und dem Innenraum 3.1A der ersten Kammer 3.1 sowie dem Innenraum 3.2A der zweiten Kammer 3.2 wird von einer Abdeckung 5 überdacht, so dass keine Speisen, Soße und dergleichen in den Zwischenraum 6 (siehe Fig. 2) zwischen die nicht bezeichneten Außenseite des Kochtopfs 1A und die sich anschließende nicht bezeichneten Außenseite der Vorrichtung V eindringen und nach unten durchtropfen kann.

Der napfförmige Grundkörper 3 ist nach oben offen und weist eine Umfangswand 3.3 und einen Boden 3.4 auf (s. Fig. 2).

In Richtung zum Topf 1.1 weist der Grundkörper 3 an seinem oberen Rand ein Befestigungsmittel 7 auf, welches in Form eines nach unten abgewinkelten Hakens bzw. einer Lasche ausgebildet ist und über den Rand 2 des Kochtopfes 1.2 an den Kochtopf/ Topf 1.1 eingehängt ist.

In dem napfförmigen Grundkörper 3 können beispielsweise Kochlöffel 8 (s. Fig. 2) oder andere Küchenutensilien wie Kellen, Spießer, Gabeln, Fleischthermometer usw. abgestellt werden, so dass diese unmittelbar am Topf 1.1 bereitstehen.

Beispielsweise nach dem Umrühren kann dann der Kochlöffel 8 in die am Kochtopf 1.1 eingehängte Vorrichtung wieder abgestellt werden. Eventuell am Kochlöffel 8 vorhandene Soße oder Suppe bzw. andere daran verblieben Speisereste gelangen in den napfförmigen Grundkörper 3. Dadurch wird vermieden, dass diese Küchenutensilien neben dem Herd auf der Arbeitsplatte, einem Teller oder dergleichen abgelegt werden müssen, wodurch diese Bereiche immer verschmutzten. Der Herd und die Arbeitsplatte bleiben mit der erfindungsgemäßen Lösung beim Kochen immer sauber.

Durch die geringe Höhe der Abdeckung 5 ist es möglich, auch noch einen Deckel (nicht dargestellt) auf den Kochtopf 1.1 zu legen, auch wenn die Vorrichtung V am Kochtopf 1.1 befestigt ist.

Der napfförmige Grundkörper 3 besteht bevorzugt aus Silikon, kann aber auch aus Kunststoff bestehen.

Die Abdeckung 5 schließt sich an den oberen Rand des Grundkörpers 3 an und liegt auf dem Randbereich 2 des Topfes 1.1 auf. An die Abdeckung 5 schießt sich der nach unten in den Kochtopf 1.1 ragende Haken bzw. die Lasche an, der/die als Befestigungsmittel 7 dient.

Das Befestigungsmittel 7 ist bevorzugt mit dem Grundkörper 3 einteilig ausgebildet.

Insbesondere wenn der Grundkörper 3 und das Befestigungsmittel 7 aus einem flexiblen Material wie Silikon bestehen, ist es möglich, die Vorrichtung an unterschiedlich großen Töpfen zu befestigen, da sich diese dann mit ihrer Umfangswand 3.3 und dem Befestigungsmittel 7 den unterschiedlichen Durchmessern der Kochtöpfe 1.1 anpasst. Das Befestigungsmittel 7 kann bei einem elastischen Material wie z.B. Silikon auch über unterschiedlich breite Randbereiche 2 von Kochtöpfen 1.1 greifen bzw. eingehängt werden, da das Befestigungsmittel 7 vom Grundkörper 3 wegbiegbar ist.

Die Abdeckung 5 und das Befestigungsmittel 7 weisen bevorzugt die gleiche Breite auf.

In Figur 3 ist die Draufsicht der erfindungsgemäßen Vorrichtung V dargestellt. Diese weist einen napfförmigen Grundkörper 3 mit hier zwei Kammern 3,1, 3.2 auf, die durch die Zwischenwand 4 voneinander getrennt sind.

Der Bereich 3.3' der Umfangswand 3.3, der in Richtung zu dem hier nicht dargestellten Kochtopf weist, ist konkav gekrümmt, so dass die Wandung 3.3 in dem Bereich 3.3' der Krümmung des Kochtopfes angepasst ist.

Der Grundkörper 3 weist eine erste Kammer 3.1 und eine zweite Kammer 3.2 auf. die durch eine Zwischenwand 4 voneinander getrennt sind.

An die beiden Kammern 3.1, 3.2 schließt sich in Richtung zum Befestigungsmittel 7 die Überdachung 5 an, die die Verbindung zu dem nach unten weisenden Bereich des Befestigungsmittels 7 herstellt und die in befestigter Position auf dem oberen Rand 2 des Kochtopfes aufliegt (siege Fig. 2). Zwischen dem Befestigungsmittel 7 und dem Bereich 3.3' der Umfangswand 3.3 ist ein Abstand b vorhanden, der in etwa der Breite des Randes des Kochtopfes 1.1 entspricht oder etwas größer ist, so dass der nach unten weisende Bereich des Befestigungsmittels 7 leicht über den Rand 2 des Kochtopfes 1.1 (siehe Fig. 1 und 2) einhängbar ist. Dies wird bei Verwendung eines elastischen Materials wie Silikon begünstigt, da dann der Grundkörper 3, die Abdeckung 5 und das Befestigungsmittel 7 elastisch verfombar sind.

In Figur 3 ist anhand der stärker dargestellten Pfeile verdeutlicht, dass die Krümmung des Randbereichs 3.3' und somit des Befestigungsbereichs bzw. Befestigungsmittels 7 auch verändert werden kann, wenn flexibles Material verwendet wird.

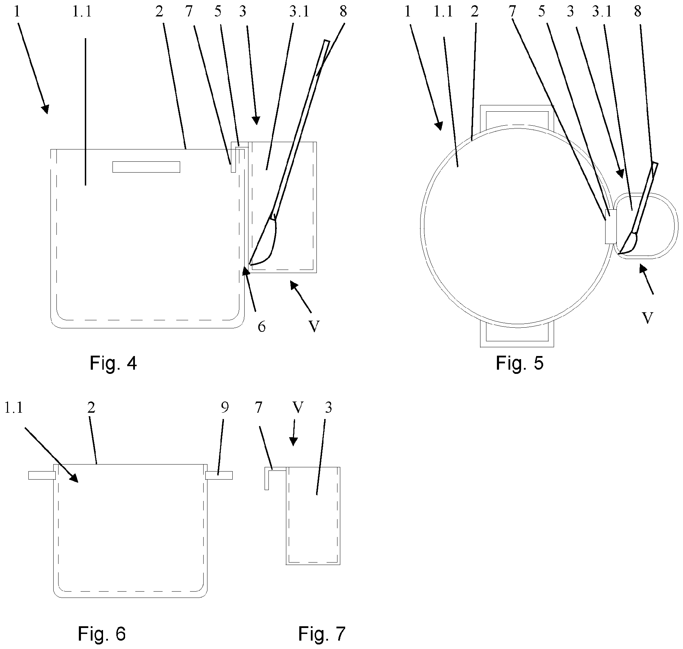

Die Figuren 4 und 5 zeigen im Schnitt und in der Draufsicht ein Küchengerät 1 in Form eines Kochtopfes 1.1 mit an dessen Rand 2 eingehängter Vorrichtung V mit einem napfförmigen Grundkörper 3 mit nur einer Kammer 3.1, in welcher sich hier ein Küchengerät in Form eines Kochlöffels 8 befindet. Die Ausführung entspricht ansonsten der Variante gemäß der Figuren 1 und 2. Es ist eine Abdeckung 5 vorhanden, die den Zwischenraum 6 zwischen Grundkörper 3 und Kochtopf 1.7 überdeckt und die hier auf dem Rand 2 des Kochtopfes 1.1 aufliegt. Daran schließt sich der Befestigungsbereich 7 an, der nach unten weist und in den Kochtopf 1.1 eingreift.

Figur 6 und 7 zeigen eine weitere Variante der erfindungsgemäßen Lösung, bei welcher der napfförmige Grundkörper 3 mit dem Befestigungsmittel 7 an dem Henkel 9 eines Kochtopfes 1.1 einhängbar ist.

Figur 6 zeigt den Kochtopf 1. mit den Henkeln 9 in Einzeldarstellung und Figur 7 die Vorrichtung V in Einzeldarstellung in der Seitenansicht.

Der Grundkörper 3 ist hier beispielsweise im Querschnitt rechteckig ausgebildet und weist an einer Seite oben zwei nebeneinander zwei im Abstand zueinander angeordnete hakenartige Befestigungsmittel 7 auf. Diese können beispielsweise schwenkbar aufgenommen sein. Dadurch kann der Abstand der nach unten weisenden Bereiche der hakenförmigen Befestigungsmittel 7 eingestellt werden, so dass diese in verschieden breite Henkel einhängbar sind.

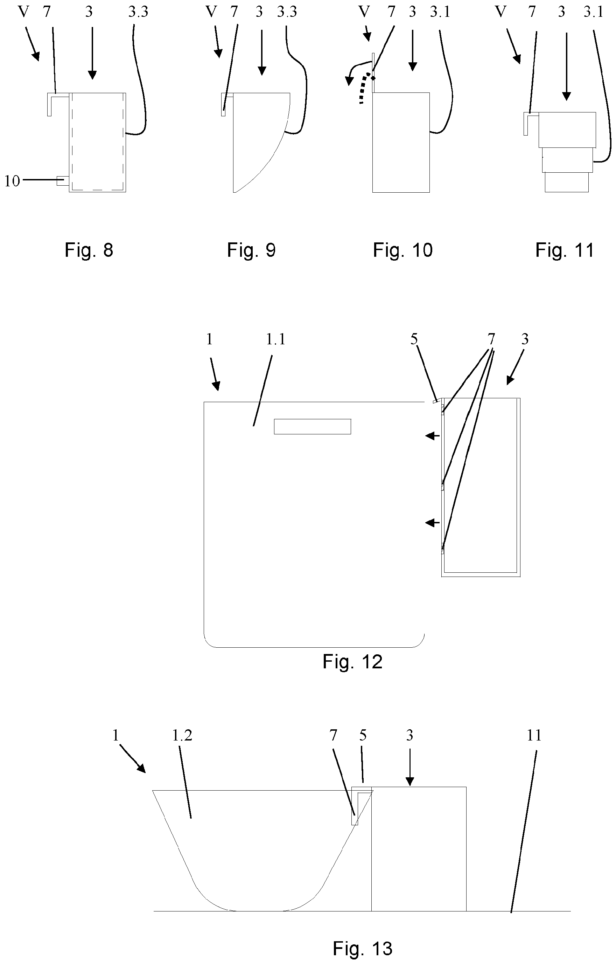

In den Figuren 8 bis 11 sind weitere Ausführungsvarianten der Vorrichtung V dargestellt. In Figur 8 ist eine Variante der Vorrichtung V mit napfförmigem Behälter 3 und Befestigungsmittel 7 dargestellt, wobei der Behälter 3an seinem unteren Wandbereich mindestens einen Abstandshalter 10 aufweist, der in eingehängtem Zustand an der Außenwand des Küchengeräts (z.B. des Kochtopfs - nicht dargestellt) anliegt. Die Umfangswand 3.3 erstreckt sich im Wesentlichen vertikal nach oben.

Gemäß Figur 9 verjüngt sich die Wandung 3.3 des Grundkörpers 3 nach unten hin.

Die Befestigungsmittel 7 sind bei den Varianten gem. Figur 8 und 9 bevorzugt laschenförmig ausgebildet.

Figur 10 zeigt eine Variante der Vorrichtung V, bei welcher ein ebenfalls laschenartiges Befestigungsmittel 7, das am dem napfartigen Grundkörper 3 angeordnet ist, nach oben und unten biegbar ist. Die durchgehende Linie zeigt ein nach oben weisendes

Befestigungsmittel 7 und die gestrichelte Linie das Befestigungsmittel 7, welches nach unten gebogen wurde und nun an ein Küchengerät hängbar ist.

Der Biegevorgang kann vorteilhafter Weise beliebig oft wiederholt werden und die Biegung dem Rand des Küchengerätes angepasst werden.

Die Variante eines teleskopierbaren und dadurch in der Höhe verstellbaren Grundkörpers 3 einer erfindungsgemäßen Vorrichtung V ist in Figur 11 argestellt. Das Befestigungsmittel 7 ist auch hier in Form eines nach unten gebogenen hakenförmigen bzw. laschenartigen Elements ausgebildet.

Gemäß eines weiteren Ausführungsbeispiels, welches in Figur 12 dargestellt ist, kann die Vorrichtung V an dem Küchengerät, hier einem Kochtopf 1.1, auch magnetisch befestigt werden. Das Küchengerät / der Kochtopf 1.1 besteht dabei aus Stahl und in oder an der Umfangswand 3.3 des napfförmigen Grundkörpers 3 sind Befestigungsmittel 7 in Form von Permanentmagneten integriert. Der Grundkörper 3 kann nun mittels der Magnete an der Außenwand des Kochtopfes befestigt werden, wenn dieser aus ferromagnetischem Material besteht. Auch hier kann eine Abdeckung 5 vorgesehen werden.

Figur 13 zeigt ein Küchengerät 1 in Form einer Schüssel 1.2 mit über das Befestigungsmittel 7 eingehängtem napfförmigem Grundkörper 3, der hier eine Höhe aufweist, die im Wesentlichen der Höhe der Schüssel 1.2 entspricht, so dass er auf eine Fläche 11 aufstellbar ist. Auch hier ist zwischen Grundkörper 3 und Schüssel 1.2 eine Abdeckung 5 vorgesehen.

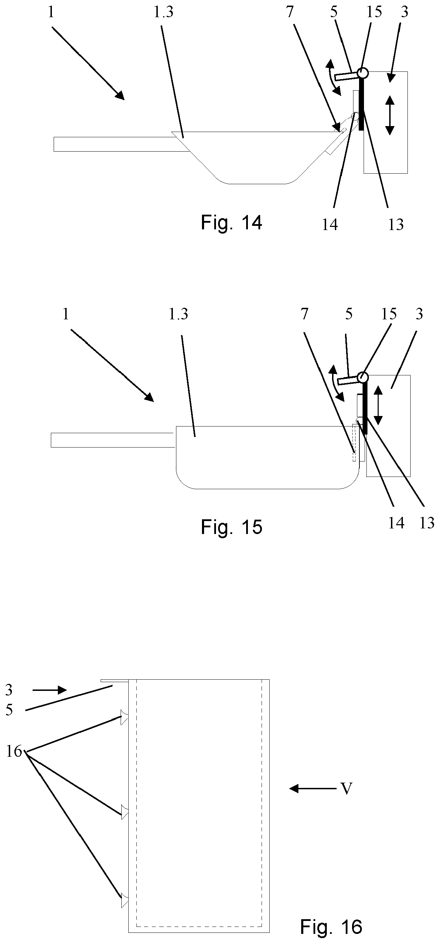

Die Figuren 14 und 15 zeigen die Befestigung der erfindungsgemäßen Vorrichtung V an einem Küchengerät 1 in Form einer Pfanne 1.3. Das Küchengerät 1 in Form einer Pfanne 1.3 weist in Figur 16 einen schrägen Rand und in Figur 15 einen nach oben gerade (vertikal) verlaufenden nicht bezeichneten Rand auf.

Die Vorrichtung wurde jeweils mittels eines klammerartigen Befestigungsmittels 7 an dem Rand geklemmt.

Der napfförmige Grundkörper 3 ist über eine Führung 13 höhenverstellbar. Zwischen der Führung 13 und der Klammer 7 (Befestigungsmittel) ist ein erstes Gelenk 14 angeordnet, durch welches die Winkelstellung der Klammer 7 entsprechend der Neigung des Randes des Küchengeräts 1 einstellbar ist um zu gewährleisten, dass der napfförmige Grundkörper 3 immer im Wesentlichen senkrecht ausgerichtet ist.

Auch hier ist bei beiden Varianten nach Fig. 14 und 15 eine Abdeckung 5 vorgesehen. die über ein zweites Gelenk 15 schwenkbar an dem Grundkörper 3 angeordnet ist.

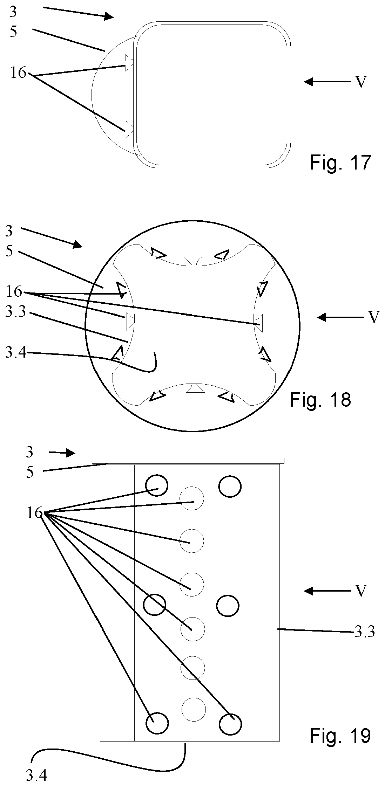

Gemäß weiterer in den Figuren 16 bis 19 dargestellten Varianten kann die Vorrichtung auch mittels Saugnäpfen 16 an dem nicht dargestellten Küchengerät befestigt werden. Bei der Variante in Figur 16 und 17 weist die Vorrichtung V einen napfförmigen Grundkörper 3 mit einem im Wesentlichen quadratischen Querschnitt der Wandung 3.3 auf. An einer Seite sind nebeneinander und übereinander mehrere Saugnäpfe 16 ausgebildet. Am oberen Ende ist auf der Seite der Saugnäpfe 16 eine kreissegmentförmige Abdeckung 5 vorgesehen.

Figur 18 zeigt eine Ansicht einer Vorrichtung V aus Richtung des Bodens 3.4 mit Saugnäpfen 16 an vier Seiten und Figur 19 die Ansicht der Vorrichtung in der Seitenansicht gemäß Figur 18.

Die vier Seiten mit den Saugnäpfen 16 sind konkav gekrümmt und die dazwischen liegenden Bereiche konvex. Die konkav gekrümmten Seiten der Wandung 3.3 können an ein Küchengerät angelegt und mittels der Saugnäpfe 16 daran befestigt werden. Vorteilhaft ist, dass die Vorrichtung mit mehreren Seiten am Küchengerät befestigt werden kann, wodurch dessen Orientierung nicht so beachtet werden muss.

Die konkav gekrümmten Seiten können (wie hier dargestellt) eine im Wesentlichen gleiche Krümmung aufweisen. Es ist jedoch auch möglich, dass die konkaven Krümmungen der einzelnen Seiten für Küchengeräte mit unterschiedlichen Durchmessern unterschiedlich groß sind

Auch bei der Variante nach den Figuren 18 und 19 ist eine Abdeckung 5 vorgesehen, die hier insbesondere kreisförmig in der Art eines Flansches am oberen Ende der Vorrichtung V angeordnet ist. Egal welche Seite der Wandung 3.3 des napfförmigen Grundkörpers 3 an dem Küchengerät befestigt wird, es ist immer eine Überdachung dazu vorhanden.

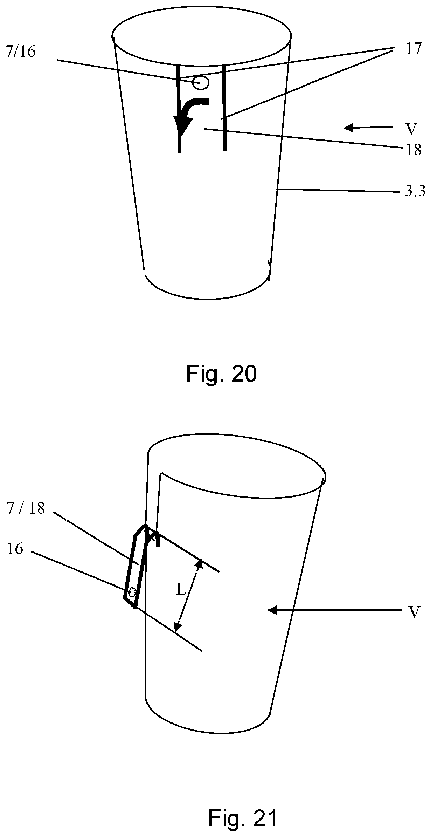

Eine weitere Variante ist in Figur 20 dargestellt. Dort ist die Vorrichtung V becherartig ausgebildet.

In der Wandung 3.3 sind vom oberen Rand aus nach unten verlaufend zwei Einschnitte 17 vorgesehen. Anstelle der Einschnitte 17 können auch Perforierungen vorgesehen sein, die ein leichtes Auftrennen ermöglichen.

Um die Vorrichtung V an den Rand eines nicht dargestellten Topfes zu hängen, wird der Bereich zwischen den Einschnitte in einer gewünschten Länge L gemäß Figur 21 in Richtung des dicken Pfeiles (siehe Fig. 20) nach unten geklappt, so dass eine Lasche 18 als Befestigungsmittel 7 gebildet wird, mit welcher die Vorrichtung V an einem hier nicht dargestellten Küchengerät (Küchenbehältnis wie Kochtopf, Pfanne, Schüssel und dergleichen) eingehängt werden kann.

Hier ist die Seitenwand 3.3 im Querschnitt kreisförmig ausgebildet.

Selbstverständlich können generell bei allen dargestellten Ausführungsbeispielen die Querschnitte der Seitenwände 3.3 auch andere Formen aufweisen, z.B. oval, dreieckförmig, viereckig, wellenförmig und dergleichen.

Es ist auch möglich, verschiedene Befestigungsmittel miteinander zu kombinieren. Z.B. kann der napfförmige Grundkörper 3 mittels hakenförmiger oder laschenförmiger Befestigungsmittel oben am Rand des Küchengerätes eingehängt oder auch nur mit der Abdeckung auf den Rand des Küchengerätes 1 (z.B. des Kochtopfs 1.1) aufgelegt werden und mittels Magneten und/oder Saugnäpfen an der Außenwand des Küchengerätes (Küchengefäß in Form eines Topfes, Kochtopfes, Schüssel, Pfanne und dergleichen) zusätzlich befestigt sein.

Selbstverständlich können mehrere der Vorrichtungen um das Küchengerät / Küchengefäß herum an dessen Außenseite befestigt werden oder ausgebildet sein.

Weiterhin kann auch der in das Küchenbehältnis eingreifende Befestigungsbereich 7 (z.B. Haken oder Lasche 18 innen am Topf zusätzlich mittels eines Magneten und/oder eines Saugnapfes 16 befestigt sein.

Dies ist ebenfalls in den Figuren 20 und Fig. 13 angedeutet. An der Lasche 18 befindet sich ein Saugnapf 16 (alternativ ein Magnet), selbstverständlich können auch mehrere Saugnäpfe und/oder Magnete vorgesehen sein. Nach dem Umklappen der Lasche 18 (Figur 21) kann diese gegen die Innenwand des nicht dargestellten Topfes gedrückt werden, so dass der Saugnapf 16 (oder der Magnet) daran befestigt wird. Dadurch ergibt sich ein sicherer Halt der Vorrichtung V am Küchenbehältnis.

Alternativ zu einem Saugnapf kann auch zusätzlich oder alternativ der Magnet verwendet werden, wenn das Küchenbehältnis aus Stahl besteht.

Die Größe der mindestens einen Ausnehmung des napfförmigen Grundkörpers der Vorrichtung V sollte generell so ausgeführt sein, dass die Küchenutensilien darin sicher aufgenommen sind und dass ggf. mehrere Küchenutensilien wie Kochlöffel, Spießer, Gabel, Kelle darin positionierbar sind. Die Höhe sollte mindestens 5 cm betragen.

Wird die Vorrichtung an einem Topf oder einer Pfanne befestigt, sollte der Boden 3.4 in einer Ebene über dem Boden des Küchengerätes/Küchengefäßes liegen, so dass dieser nicht auf der Herdplatte aufliegt, wenn der napfförmige Grundkörper aus Silikon oder Kunststoff besteht. Lediglich bei einem Induktionsherd kann der napfförmige Grundkörper auch auf dem Kochfeld aufliegen, da bei Verwendung von Kunststoff oder Silikon (oder ggf. auch Aluminium) sich dieser nicht mit erwärmt.

Mit der erfindungsgemäßen Lösung wird erstmalig eine praktikable Lösung geschaffen, mit welcher ein Küchengerät nahe und außerhalb eines Topfes aufgenommen werden kann und mit dem sicher Verunreinigungen durch herabtropfende Nahrungsmittel vermieden werden.

Dadurch, dass die Vorrichtung einen napfförmigen Grundkörper aufweist, werden die Küchenutensilien darin sicher aufgenommen.

Neben den dargestellten Ausführungsvarianten sind auch andere Befestigungsmöglichkeiten des napfförmigen Grundkörpers am Topf möglich.

Zum Beispiel kann das Küchengerät an seinem Randbereich eine Aufnahme oder Führung aufweisen, mit dem ein korrespondierendes Element des napfförmigen Grundkörpers in Eingriff bringbar ist.

Neben der Anbringung an Töpfen, Schüsseln und dergleichen kann die Vorrichtung auch an Rührbehältern, Küchenmaschinen oder Mixern bzw. an Rührschüsseln von Küchenmaschinen oder Mixern montiert werden, um ein oder mehrere Küchenwerkzeuge wie Löffel, Gabel, Kelle usw. daran zu befestigen. Dadurch kann beispielsweise ein Löffel zum Abschmecken bzw. umrühren mittels der erfindungsgemäßen Vorrichtung einfach außen bzw. unmittelbar neben dem Küchengerät wie Topf, Schüssel, Rührbehälter usw. positioniert werden.

### Bezugszeichenliste

- 1: Küchengerät
- 1.1: Kochtopf
- 1.2: Schüssel
- 1.3: Pfanne
- 1A: Innenraum des Kochtopfs
- 2: Rand
- 3: Grundkörper
- 3.3: Umfangswand
- 3.3': in Richtung zum Kochtopf weisender Bereich der Umfangswand 3.3
- 3.4: Boden
- 3.1.1: erste Kammer
- 3.1A: Innenraum der ersten Kammer
- 3.1.2: zweite Kammer
- 3.2A: Innenraum der zweiten Kammer
- 4: Zwischenwand
- 5: Abdeckung
- 6: Zwischenraum
- 7: Befestigungsmittel
- 8: Kochlöffel
- 9: Henkel
- 10: Abstandshalter
- 11: Fläche
- 12: Durchbrüche
- 13: Führung
- 14: Erstes Gelenk
- 15: Zweites Gelenk
- 16: Saugnäpfe
- 17: Einschnitte
- 18: Lasche

- V: Vorrichtung
- b: Abstand
- L: Länge

## Patentansprüche

1. Vorrichtung zur Aufnahme wenigstens eines Küchenwerkzeuges (8) in Form eines Löffels, eines Kochlöffels, einer Gabel, eines Spießes, einer Kelle oder dergleichen oder eines Fleischthermometers, wobei die Vorrichtung (V) einen napfförmigen Grundkörper (3) mit wenigstens einem Innenraum (3.1A, 3.2A) aufweist, wobei
der napfförmige Grundkörper (3) nach oben hin offen ist und eine sich im Wesentlichen vertikal nach oben erstreckende Umfangswand (3.3) und einen Boden (3.4) aufweist, wobei der napfförmige Grundkörper (3) wenigstens ein Befestigungsmittel (7) zur Herstellung einer Verbindung mit einem Küchengerät (1) aufweist derart, dass sich der napfförmige Grundkörper (3) außerhalb des Küchengerätes (1) befindet und dass die Vorrichtung eine Abdeckung (5) aufweist, welche vom Grundkörper (3) bis über einen oberen Rand des Küchengerätes (1) reicht, wobei die Abdeckung einen Zwischenraum (6) zwischen dem Grundkörper (3) und dem Küchengerät (1) überdeckt und
- **dadurch gekennzeichnet, dass** das Befestigungsmittel (7) in Form eines oder mehrerer Magnete ausgebildet ist, welche am napfförmigen Grundkörper (3) angeordnet sind und dass der napfförmige Grundkörper (3) mittels der Magnete am Küchengerät (1) befestigbar ist und/oder
- dass das Befestigungsmittel (7) in Form mindestens eines Saugnapfes (16) ausgebildet ist.

2. Vorrichtung zur Aufnahme wenigstens eines Küchenwerkzeuges (8) in Form eines Löffels, eines Kochlöffels, einer Gabel, eines Spießes, einer Kelle oder dergleichen oder eines Fleischthermometers, wobei die Vorrichtung (V) einen napfförmigen Grundkörper (3) mit wenigstens einem Innenraum (3.1A, 3.2A) aufweist, wobei
der napfförmige Grundkörper (3) nach oben hin offen ist und eine sich im Wesentlichen vertikal nach oben erstreckende Umfangswand (3.3) und einen Boden (3.4) aufweist, wobei der napfförmige Grundkörper (3) wenigstens ein Befestigungsmittel (7) zur Herstellung einer Verbindung mit einem Küchengerät (1) aufweist derart, dass sich der napfförmige Grundkörper (3) außerhalb des Küchengerätes (1) befindet und dass die Vorrichtung eine Abdeckung (5) aufweist, welche vom Grundkörper (3) bis über einen oberen Rand des Küchengerätes (1) reicht, **dadurch gekennzeichnet, dass** der napfförmige Grundkörper (3) mit dem Befestigungsmittel (7) um eine horizontale Achse biegbar verbunden ist und sich die Abdeckung (5) über den gesamten Zwischenraum zwischen dem Küchengerät (1) und dem napfförmigen Grundkörper (3) erstreckt.

3. Vorrichtung zur Aufnahme wenigstens eines Küchenwerkzeuges (8) in Form eines Löffels, eines Kochlöffels, einer Gabel, eines Spießes, einer Kelle oder dergleichen oder eines Fleischthermometers, wobei die Vorrichtung (V) einen napfförmigen Grundkörper (3) mit wenigstens einem Innenraum (3.1A, 3.2A) aufweist, wobei
der napfförmige Grundkörper (3) nach oben hin offen ist und eine sich im Wesentlichen vertikal nach oben erstreckende Umfangswand (3.3) und einen Boden (3.4) aufweist, wobei der napfförmige Grundkörper (3) wenigstens ein Befestigungsmittel (7) zur Herstellung einer Verbindung mit einem Küchengerät (1) aufweist derart, dass sich der napfförmige Grundkörper (3) außerhalb des Küchengerätes (1) befindet und dass die Vorrichtung eine Abdeckung (5) aufweist, welche vom Grundkörper (3) bis über einen oberen Rand des Küchengerätes (1) reicht, wobei die Abdeckung einen Zwischenraum (6) zwischen dem Grundkörper (3) und dem Küchengerät (1) überdeckt,
- der napfförmige Grundkörper (3) mit dem Befestigungsmittel (7) einteilig ausgebildet ist,
- das Befestigungsmittel (7) in der Art einer Lasche ausgebildet ist und der napfförmige Grundkörper (3) damit am Randbereich und/oder am Griff und/oder am Henkel (9) des Küchengerätes (1) einhängbar ist,
- **dadurch gekennzeichnet, dass** sich die Abdeckung (5) über den gesamten Zwischenraum zwischen
dem Küchengerät (1) und dem napfförmigen Grundkörper (3) erstreckt und
der Grundkörper (3), die Abdeckung (5) und das Befestigungsmittel (7) aus Silikon bestehen und elastisch verformbar sind.

4. Vorrichtung nach Anspruch 2, **dadurch gekennzeichnet, dass** das Befestigungsmittel (7) an das Küchengerät (1) klemmbar ist.

5. Vorrichtung nach Anspruch 4, **dadurch gekennzeichnet, dass** das Befestigungsmittel (7) einen Klemmbereich zur Befestigung am Rand, dem Griff oder dem Henkel (9) des Küchengerätes (1) aufweist.

6. Vorrichtung nach Anspruch 4 oder 5, **dadurch gekennzeichnet, dass** das Befestigungsmittel (7) in der Art einer Klammer ausgebildet ist und der napfförmige Grundkörper (3) mittels der Klammer am Küchengerät (1) befestigbar ist.

7. Vorrichtung nach einem der Ansprüche1 bis 3, **dadurch gekennzeichnet, dass** der napfförmige Grundkörper (3) und/oder das Befestigungsmittel (7) in unterschiedlichen Farben herstellbar ist und/oder bereichsweise unterschiedliche Farben aufweist.

8. Vorrichtung nach einem der Ansprüche 1 bis 7, **dadurch gekennzeichnet, dass** der napfförmige Grundkörper (3) in Richtung zum Küchengerät (1) einen umfangsseitigen Wandabschnitt (3.3') aufweist, der dem umfangsseitigen Verlauf des Randbereichs des Küchengerätes (1) angepasst ist.

9. Vorrichtung nach einem der Ansprüche 1 bis8, **dadurch gekennzeichnet, dass** der napfförmige Grundkörper (3) eine oder mehrere Kammern (3.1.1, 3.1.2) zur Aufnahme von jeweils einem oder mehreren Küchenwerkzeugen (8) aufweist.

10. Vorrichtung nach einem der Ansprüche 1 bis 9, **dadurch gekennzeichnet, dass** verschiedene Befestigungsmittel kombiniert sind.

## Claims

1. Device for receiving at least one kitchen tool (8) in the form of a spoon, a cooking spoon, a fork, a skewer, a ladle or the like or a meat thermometer, the device (V) having a cup-shaped base body (3) with at least one interior (3.1A, 3.2A), the cup-shaped base body (3) being open at the top and having a substantially vertically upwardly extending circumferential wall (3.3) and a base (3.4), the cup-shaped base body (3) having at least one fastening means (7) for producing a connection to a kitchen appliance (1) in such a way that the cup-shaped base body (3) is located outside the kitchen appliance (1), and in that the device has a cover (5) which extends from the base body (3) to above an upper edge of the kitchen appliance (1), the cover covering an intermediate space (6) between the base body (3) and the kitchen appliance (1), and in that the cup-shaped base body (3) has at least one fastening means (7) for producing a connection to the kitchen appliance (1) and
- **characterized in that** the fastening means (7) is in the form of one or more magnets which are arranged on the cup-shaped base body (3), and **in that** the cup-shaped base body (3) can be fastened to the kitchen appliance (1) by means of the magnets, and/or
- **in that** the fastening means (7) is in the form of at least one suction cup (16).

2. Device for receiving at least one kitchen tool (8) in the form of a spoon, a cooking spoon, a fork, a skewer, a ladle or the like or a meat thermometer, the device (V) having a cup-shaped base body (3) with at least one interior (3.1A, 3.2A), the cup-shaped base body (3) being open at the top and having a substantially vertically upwardly extending peripheral wall (3.3) and a base (3.4), wherein the cup-shaped base body (3) has at least one fastening means (7) for producing a connection to a kitchen appliance (1) in such a way that the cup-shaped base body (3) is located outside the kitchen appliance (1), and in that the device has a cover (5) which extends from the base body (3) to above an upper edge of the kitchen appliance (1), **characterised in that** the cup-shaped base body (3) is connected to the fastening means (7) so as to be bendable about a horizontal axis and the cover (5) extends over the entire intermediate space between the kitchen appliance (1) and the cup-shaped base body (3).

3. Device for receiving at least one kitchen tool (8) in the form of a spoon, a cooking spoon, a fork, a skewer, a ladle or the like or a meat thermometer, the device (V) having a cup-shaped base body (3) with at least one interior (3.1A, 3.2A), the cup-shaped base body (3) being open at the top and having a substantially vertically upwardly extending peripheral wall (3.3) and a base (3.4), wherein the cup-shaped base body (3) has at least one fastening means (7) for producing a connection to a kitchen appliance (1) in such a way that the cup-shaped base body (3) is located outside the kitchen appliance (1), and in that the device has a cover (5) which extends from the base body (3) to above an upper edge of the kitchen appliance (1), the cover covering an intermediate space (6) between the base body (3) and the kitchen appliance (1),
- the cup-shaped base body (3) is formed integrally with the fastening means (7),
- the fastening means (7) is designed in the manner of a tab and the cup-shaped basic body (3) can be suspended therewith on the edge region and/or on the handle and/or on the handle (9) of the kitchen utensil (1)
- **characterised in that** the cover (5) extends over the entire intermediate space between the kitchen appliance (1) and the cup-shaped base body (3) and the base body (3), the cover (5) and the fastening means (7) are made of silicone and are elastically deformable.

4. Device according to claim 2, **characterized in that** the fastening means (7) can be clamped to the kitchen appliance (1).

5. Device according to claim 4, **characterized in that** the fastening means (7) comprises a clamping area for fastening to the edge, the handle or the handle (9) of the kitchen utensil (1).

6. Device according to claim 4 or 5, **characterized in that** the fastening means (7) is designed in the manner of a clip and the cup-shaped basic body (3) can be fastened to the kitchen appliance (1) by means of the clip.

7. Device according to any one of claims 1 to 3, **characterized in that** the cup-shaped basic body (3) and/or the fastening means (7) can be produced in different colours and/or has different colours in certain areas.

8. Device according to any one of claims 1 to 7, **characterized in that** the cup-shaped base body (3) has, in the direction of the kitchen appliance (1), a peripheral wall portion (3.3') which is adapted to the peripheral course of the edge region of the kitchen appliance (1).

9. Device according to any one of claims 1 to8, **characterized in that** the cup-shaped base body (3) has one or more chambers (3.1.1, 3.1.2) for receiving in each case one or more kitchen tools (8).

10. Device according to any one of claims 1 to 9, **characterized in that** different fasteners are combined.

## Revendications

1. Dispositif destiné à recevoir au moins un outil de cuisine (8) sous la forme d'une cuillère, d'une cuillère de cuisine, d'une fourchette, d'une broche, d'une louche ou similaire ou d'un thermomètre à viande, le dispositif (V) présentant un corps de base (3) en forme de godet avec au moins un espace intérieur (3.1A, 3.2A), le corps de base (3) en forme de godet étant ouvert vers le haut et présentant une paroi périphérique (3.3) s'étendant sensiblement verticalement vers le haut et un fond (3.2A), le corps de base (3) en forme de godet présentant une partie supérieure (3.3) et une partie inférieure (3.2A).4), le corps de base en forme de godet (3) présentant au moins un moyen de fixation (7) pour établir une liaison avec un appareil de cuisine (1) de telle sorte que le corps de base en forme de godet (3) se trouve à l'extérieur de l'appareil de cuisine (1) et que le dispositif présente un couvercle (5) qui s'étend du corps de base (3) jusqu'au-dessus d'un bord supérieur de l'appareil de cuisine (1), le couvercle recouvrant un espace intermédiaire (6) entre le corps de base (3) et l'appareil de cuisine (1) et
- **Caractérisé en ce que** le moyen de fixation (7) est réalisé sous la forme d'un ou de plusieurs aimants qui sont disposés sur le corps de base (3) en forme de godet et **en ce que** le corps de base (3) en forme de godet peut être fixé à l'ustensile de cuisine (1) au moyen des aimants, et/ou
- **En ce que** le moyen de fixation (7) est réalisé sous la forme d'au moins une ventouse (16).

2. Dispositif pour recevoir au moins un outil de cuisine (8) sous la forme d'une cuillère, d'une cuillère de cuisine, d'une fourchette, d'une broche, d'une louche ou similaire ou d'un thermomètre à viande, le dispositif (V) présentant un corps de base (3) en forme de godet avec au moins un espace intérieur (3.1A, 3.2A), le corps de base (3) en forme de godet étant ouvert vers le haut et présentant une paroi périphérique (3.3) s'étendant sensiblement verticalement vers le haut et un fond (3.4), le corps de base en forme de godet (3) présentant au moins un moyen de fixation (7) pour réaliser une liaison avec un appareil de cuisine (1) de telle sorte que le corps de base en forme de godet (3) se trouve à l'extérieur de l'appareil de cuisine (1) et que le dispositif présente un couvercle (5), qui s'étend du corps de base (3) jusqu'au-dessus d'un bord supérieur de l'appareil de cuisine (1), **caractérisé en ce que** le corps de base (3) en forme de godet est relié au moyen de fixation (7) de manière à pouvoir être plié autour d'un axe horizontal et **en ce que** le couvercle (5) s'étend sur tout l'espace intermédiaire entre l'appareil de cuisine (1) et le corps de base (3) en forme de godet.

3. Dispositif pour recevoir au moins un outil de cuisine (8) sous la forme d'une cuillère, d'une cuillère de cuisine, d'une fourchette, d'une broche, d'une louche ou similaire ou d'un thermomètre à viande, le dispositif (V) présentant un corps de base (3) en forme de godet avec au moins un espace intérieur (3.1A, 3.2A), le corps de base (3) en forme de godet étant ouvert vers le haut et présentant une paroi périphérique (3.3) s'étendant sensiblement verticalement vers le haut et un fond (3.4), le corps de base (3) en forme de godet présentant au moins un moyen de fixation (7) pour réaliser une liaison avec un appareil de cuisine (1) de telle sorte que le corps de base (3) en forme de godet se trouve à l'extérieur de l'appareil de cuisine (1) et que le dispositif présente un couvercle (5) qui s'étend du corps de base (3) jusqu'au-dessus d'un bord supérieur de l'appareil de cuisine (1), le couvercle recouvrant un espace intermédiaire (6) entre le corps de base (3) et l'appareil de cuisine (1),
- Le corps de base (3) en forme de godet est réalisé d'une seule pièce avec le moyen de fixation (7),
- Le moyen de fixation (7) est conçu à la manière d'une languette et le corps de base (3) en forme de godet peut ainsi être accroché à la zone de bord et/ou à la poignée et/ou à l'anse (9) de l'ustensile de cuisine (1),
- **Caractérisé en ce que** le couvercle (5) s'étend sur tout l'espace intermédiaire entre l'ustensile de cuisine (1) et le corps de base (3) en forme de godet, et le corps de base (3), le couvercle (5) et le moyen de fixation (7) sont en silicone et sont déformables élastiquement.

4. Dispositif selon la réclamation 2, **caractérisé en ce que** le moyen de fixation (7) peut être serré sur l'ustensile de cuisine (1).

5. Dispositif selon la réclamation 4, **caractérisé en ce que** le moyen de fixation (7) présente une zone de serrage pour la fixation au bord, à la poignée ou à l'anse (9) de l'ustensile de cuisine (1).

6. Dispositif selon la réclamation 4 ou 5, **caractérisé en ce que** le moyen de fixation (7) est conçu à la manière d'une agrafe et le corps de base (3) en forme de godet peut être fixé à l'ustensile de cuisine (1) au moyen de l'agrafe.

7. Dispositif selon l'une des réclamations 1 à 3, **caractérisé en ce que** le corps de base (3) en forme de godet et/ou le moyen de fixation (7) peuvent être fabriqués dans différentes couleurs et/ou présentent par zones différentes couleurs.

8. Dispositif selon l'une des réclamations 1 à 7, **caractérisé en ce que** le corps de base (3) en forme de godet présente, en direction de l'appareil de cuisine (1), une section de paroi (3.3') périphérique qui est adaptée au tracé périphérique de la zone de bordure de l'appareil de cuisine (1).

9. Dispositif selon l'une des réclamations 1 à 8, **caractérisé en ce que** le corps de base (3) en forme de godet présente une ou plusieurs chambres (3.1.1, 3.1.2) destinées à recevoir chacune un ou plusieurs outils de cuisine (8).

10. Dispositif selon l'une quelconque des réclamations 1 à 9, **caractérisé en ce que** différents moyens de fixation sont combinés.
